# EUROPEAN PATENT SPECIFICATION

(11) **EP 3 605 530 B1**
(45) Date of publication and mention of the grant of the patent: **20.01.2021**
(21) Application number: 18187240.9
(22) Date of filing: 03.08.2018
(51) Int. Cl.: G10L 15/22

(54) **METHOD AND APPARATUS FOR RESPONDING TO A VOICE COMMAND**
VERFAHREN UND VORRICHTUNG ZUM ANTWORTEN AUF EINEN SPRACHBEFEHL
PROCÉDÉ ET APPAREIL POUR RÉPONDRE À UNE COMMANDE VOCALE

(43) Date of publication of application: 05.02.2020
(73) Proprietor: Vestel Elektronik Sanayi ve Ticaret A.S., 45030 Manisa (TR)
(72) Inventor: KÍRÍSKEN, Barbaros, 45030 Manisa (TR)
(74) Representative: Flint, Adam

(56) References cited:
- EP-A1- 3 093 780
- US-A1- 2014 278 438

## Description

### Technical Field

The present disclosure relates to a method and apparatus for responding to a voice command.

### Background

Voice-controllable devices, including for example smart home systems or "personal assistants" or smart speakers, such as Amazon Echo™, Amazon Dot™, Google Home™, etc., are controllable by a user's voice. That is, a voice-controllable device has a microphone that receives sound and then processes the received sound to determine whether a command, spoken by a user, is included in the received sound. Similarly, remote interactive voice response (IVR) systems are increasingly common, and allow users to interact with their bank or some other organisation or call centre or the like using voice commands which are typically input by a user using a telephone. The response may be provided to the user either in visual or acoustic format. European Patent EP3093780 by J. N. Jitkoff et al, "State-Dependent Query Response", 16.11.2016, discloses a spoken dialogues system providing a response to a user visually, audibly, or both depending on the result-presentation-state (first state or second state) of the device.

### Summary

According to a first aspect disclosed herein, there is provided a computer-implemented method of responding to a voice command received from a user, the method comprising:
receiving a voice command from a user;
processing the received voice command to formulate a response for the user; and
providing the response to the user;
wherein the response is selectively provided to the user in an audio format or in a visual format depending on one or more characteristics of the response.

In an example, the response comprises a number of options from which the user is required to select, the one or more characteristics of the response comprising the number of options from which the user is required to select, and the response is provided to the user in a visual format if the response contains more than a threshold

In an example, the one or more characteristics of the response comprises the amount of time necessary for the entire response to be played out audibly to the user, and the response is provided to the user in a visual format if the entire response would take longer than a threshold period of time to be played out audibly to the user.

In an example, the response comprises a number of options from which the user is required to select, wherein the one or more characteristics of the response comprise the amounts of time necessary for each of the options to be played out audibly to the user and the amount of time necessary for the entire response to be played out audibly to the user, and the response is provided to the user in a visual format if any of the options of the response would take longer than a first threshold period of time to be played out audibly to the user or if the entire response would take longer than a second threshold period of time to be played out audibly to the user.

In an example, the one or more characteristics of the response comprises the number of words in the response, and the response is provided to the user in a visual format if the response contains more than a threshold number of words.

These thresholds may operate together such that if one or the other threshold is met, then the response is played out audibly to the user.

In an example, the method is performed by an apparatus which comprises a display screen for display of a response in a visual format.

In an example, the method is performed by an apparatus which is in communication with another device, wherein the apparatus is operable to cause a display screen of the other device to display a response in a visual format.

According to a second aspect disclosed herein, there is provided apparatus for responding to a voice command received from a user, the apparatus comprising:
a voice input device for receiving a voice command from a user; and
a processor constructed and arranged to process the received voice command to formulate a response for the user and to cause the response to be provided to the user;
wherein the processor is arranged to cause the response to be selectively provided to the user in an audio format or in a visual format depending on one or more characteristics of the response.

The processing of the received voice command to formulate a response for the user may be carried out locally and/or in conjunction with for example a remote server.

In an example, in the case that the response comprises a number of options from which the user is required to select, the processor is arranged to cause the response to be provided to the user in a visual format if the response contains more than a threshold number of options from which the user is required to select.

In an example, the processor is arranged to cause the response to be provided to the user in a visual format if the entire response would take longer than a threshold period of time to be played out audibly to the user.

In an example, in the case that the response comprises a number of options from which the user is required to select, the processor is arranged to cause the response to be provided to the user in a visual format if any of the options of the response would take longer than a first threshold period of time to be played out audibly to the user or if the entire response would take longer than a second threshold period of time to be played out audibly to the user.

In an example, the processor is arranged to cause the response to be provided to the user in a visual format if the response contains more than a threshold number of words.

In an example, the apparatus comprises a display screen for display of a response in a visual format.

In an example, the apparatus is operable to be in communication with another device and being operable to cause a display screen of said other device to display a response in a visual format.

There may also be provided a computer program comprising instructions such that when the computer program is executed on a computing device, the computing device is arranged to carry out a method as described above.

There may be provided a non-transitory computer-readable storage medium storing a computer program as described above.

### Brief Description of the Drawings

To assist understanding of the present disclosure and to show how embodiments may be put into effect, reference is made by way of example to the accompanying drawings in which:
Figure 1 shows schematically an example of a user interacting with apparatus for responding to a voice command;
Figure 2 shows schematically the user being presented with a response that contains a large number of options;
Figure 3 shows schematically the user being presented with a response that contains a small number of options; and
Figure 4 shows a schematic flow diagram of an example of a method according to the present disclosure.

### Detailed Description

As mentioned, voice-controllable devices, including for example smart home systems or "personal assistants" or smart speakers, such as Amazon Echo™, Amazon Dot™, Google Home™, Alexa™, Siri™, and Google Now™, etc., are controllable by a user's voice. Typically the voice-controllable device has a microphone that receives sound and then processes the received sound to determine whether a command, spoken by a user, is included in the received sound. Similarly, remote interactive voice response (IVR) systems are increasingly common, and allow users to interact with their bank or some other organisation or call centre or the like using voice commands which are typically input by a user using a telephone.

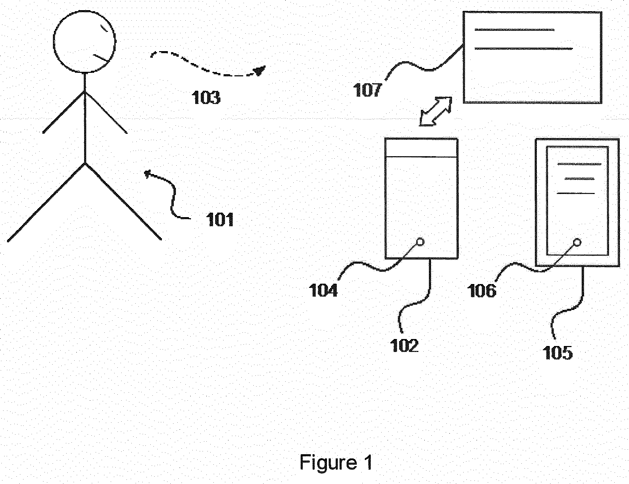

Figure 1 shows schematically an example of a user 101 interacting with apparatus 102 for responding to a voice command 103 from the user 101 according to the present disclosure.

The apparatus 102 may be local to the user 101. The apparatus 102 may be for example a smart home system, a "personal assistant", smart speakers or some other computing device.

The user 101 may interact directly with the apparatus 102. In such a case, the apparatus 102 has a microphone 104 for receiving audio input from the user 101, including in particular voice commands 103 from the user 101.

Alternatively or additionally, the user 101 may interact with the locally provided apparatus 102 using a user device 105. In such a case, the user device 105 may communicate with the apparatus 102 using for example a local connection, which may be wireless, such as WiFi or Bluetooth, etc. and/or wired. The user device 105 in such as case has a microphone 106 for receiving audio input from the user 101, including in particular voice commands 103 from the user 101. The user device 105 passes the input in some suitable format to the apparatus 102. In an example, the user device 105 is a mobile or non-mobile computing device, such as a mobile or cell phone (including so-called "smart phones"), a personal digital assistant, a pager, a tablet or laptop or personal computer, or a wearable communication device (including so-called "smart watches"). Here, a smart phone is a mobile (cellular) phone with an operating system and an integrated mobile broadband cellular network connection for voice and data communication. A smart phone typically enables the user to have Internet access and typically includes a Web browser and one or more of Wi-Fi wireless connectivity and Bluetooth wireless connectivity. The user device 105 in this example has the usual processor, working memory, data storage for storing data, etc. (not shown). The user device 105 can receive the voice command 103 from the user 101 and process it as required to generate for example a digital audio file which is passed to the apparatus 102.

In another example, the apparatus 102 may be remote from the user 101, and the user device 105 is in communication with the apparatus 102 over a wide area network, including for example the Internet, and/or via a cellular (mobile) communications network, and/or via a landline phone network. The apparatus 102 may be for example associated with some service or product supplier, such as the user's bank or some call centre, etc.

In any event, whether local to the user 101 or remote from the user 101, the apparatus 102 has the usual processor, working memory, data storage for storing data, etc. (not shown).

Also shown schematically in Figure 1 is a display screen 107. The display screen 107 is in communication with the apparatus 102 and is capable of displaying visually at least responses that are provided by the apparatus 102 for the user 101.

A number of options for the display screen 107 are possible. For example, the display screen 107 may be part of or associated with the apparatus 102. This is particularly useful in the case that the apparatus 102 is local to the user 101 and the user 101 interacts directly with the apparatus 102. As another example particularly in the case that the user 101 interacts with the apparatus 102 (whether local to the user 101 or remote from the user 101) via a user device 105, the display screen 107 may be part of or associated with the user device 105. This may be particularly convenient in the case that the user device 105 is a computing device, such as a computer, smart phone, etc. In another example, the display screen 107 may be part of some other device altogether, such as for example a television set or some other computing device, and either the apparatus 102 or the user device 105 or both can communicate with the display screen 107 depending on the particular implementation.

Whether the apparatus 102 is local to the user 101 or remote from the user 101, and whether the user 101 interacts directly with the apparatus 102 or via some user device 105, a common situation is that, upon receipt of a voice command, the apparatus 102 processes the voice command to formulate a response for the user 101. In many cases, the response is long or complicated. As examples, the response may contain a large amount of text or words, and/or may take a long time to read out. As another example, the response may require that a number of options are provided to the user 101 from which the user 101 is expected to select. The options typically set out a number of possible speech commands to be selected by the user 101 for the next stage in the processing by the apparatus 102. Many examples of this will be familiar.

For example, the user 101 may be calling some bank or some other remote organisation or call centre. The user 101 issues a voice command 103 (which in some examples may be an instruction, a query, a request, etc.) and the user 101 is presented with a number of options as part of an remote interactive voice response (IVR) system. The options might be for example a number of departments in the organisation and the user 101 is expected to select one of those departments for the next stage in the call. As another example, the options might be whether the user 101 has a technical query, has an accounts query, wishes to return a faulty or incorrect item purchased from the organisation, etc. and the user 101 is again expected to select one of those for the next stage in the call. As another example, the response may contain a large amount of text or words, and/or may take a long time to read out, regardless of whether or not the response contains a number of options as such.

As an example where the user 101 interacts with a locally provided apparatus 102, either directly or via a user device 105, the user 101 may have given a voice command 103 to the apparatus 102. Again, the voice command 103 may in some examples be an instruction, a query, a request, etc. The apparatus 102 processes the command 103 and presents the user 101 with response. The response may in some cases be long or complicated. As examples, again the response may contain a large amount of text or words, and/or may take a long time to read out. As another example, the response may present a number of options for the next stage. For example, the apparatus 102 may allow the user 101 to control heating or lighting in the user's home or workplace. The user 101 may have spoken an instruction like "Turn on lights" or "Turn heating up" and the apparatus 102 responds with the options "living room", "kitchen", "main bedroom", etc. As another example, the user 101 may have spoken an instruction like "Transfer 100 euros to [Child A]", and the apparatus 102 responds with the options "From Current Account", "From Savings Account AAA", "From Savings Account BBB", etc. As another example, the user 101 may have spoken an instruction like "Play a song from [Artist Name] from 2018" and the apparatus 102 finds that there were say three or more songs from that artist in that year and so needs to present those songs as options for the user to select from.

A problem is that if the response to a voice command 103 provided by the apparatus 102 is provided audibly to the user and the response is long and/or complicated, it can be difficult for the user 101 to remember all details of the response by the time that the entire response has been read out or played out to the user 101. It can therefore be difficult in such cases for the user 101 to select the next correct or appropriate step.

To address this, the apparatus 102 operates so as to provide the response in an audio format or in a visual format depending on one or more characteristics of the response. For example, if the response is short (either in terms of the amount of time it would take to read out or the number of words in the response or both) or not complex, then the apparatus 102 may provide the response only in audio format (to be played back by the apparatus 102 or by the user device 105, depending on the implementation as discussed above). On the other hand, if the response is long or complex, then the apparatus 102 may provide the response in a visual format (to be presented on the display screen 107, whether part of the apparatus 102 or the user device 105 or some other device). In the case that the response is provided in a visual format, the apparatus 102 may cause the response additionally to be provided in audio format or only in visual format.

The apparatus 102 may determine the appropriate format for the response based on for example the number of options that need to be presented to the user 101 in the response. If the number of options that need to be presented to the user 101 in the response is small, then the options may be presented audibly, in an audio format, either directly by the apparatus 102 or via the user device 105 or some other device having audio playback functionality (such as a television set 107). This reflects the fact that in practice, a user 101 is often able to remember a small number of options if presented audibly to the user. On the other hand, if the number of options that need to be presented to the user 101 in the response is large, then the options may be presented visually, in a visual format, again either directly by the apparatus 102 or via the user device 105 or some other device having audio playback functionality (such as a television set 107). As noted, in the case that the number of options that need to be presented to the user 101 in the response is large, then the options may additionally be provided presented audibly, in an audio format, to the user 101, though in other examples the options may be presented only visually. The threshold for the number of options may be a small number, such as two or three say, so that if there are more than two or three options, then the apparatus 102 operates to present the options visually. In some examples, the user 101 is able to set the threshold at the apparatus 102, and may set different thresholds for different functions. For example, if the voice command 103 from the user 101 relates to banking and therefore it is very important for the user 101 to be able to learn the options correctly, the threshold may be small. On the other hand, if the voice command 103 from the user 101 relates to control of lighting or heating in the user's home or office, the threshold may be greater as it is not so important if there is an occasional error in the user 101 hearing the options when presented audibly.

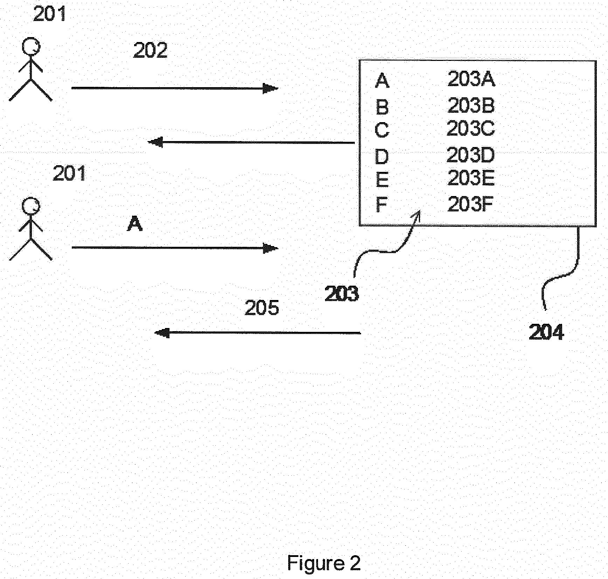

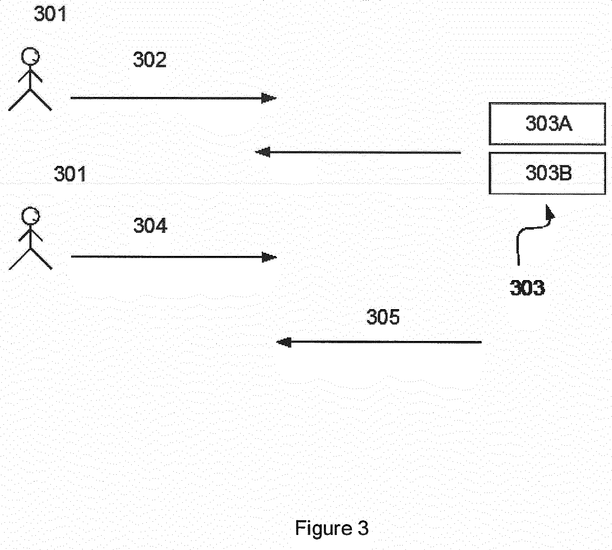

This is illustrated schematically in Figures 2 and 3. Referring first to Figure 2, in this example a user 201 issues a voice command 202 which is received at the apparatus (not shown in Figure 2) either directly or indirectly via a user device (not shown in Figure 2). The apparatus formulates a response 203 to the voice command 202. In this example, the response 203 contains a large number of options 203A - 203F (here, six options), which exceeds the threshold for the number of options (which may be say two options). Accordingly, the apparatus causes the response 203, specifically the options 203A - 203F, to be displayed on a display screen 204 for viewing by the user 201. The user 201 selects option A. In an example, the user 201 may select an option using a voice command. Alternatively or additionally, the user may select an option by manual input to a device associated with the display screen 204, which may be for example the apparatus itself, a user device or some other computing device. Upon selection of the option A, the apparatus responds 205 by taking some action in response to the selection of option A by the user 201.

Referring to Figure 3, in this example a user 301 issues a voice command 302 which is received at the apparatus (not shown in Figure 3) either directly or indirectly via a user device (not shown in Figure 3). The apparatus formulates a response 303 to the voice command 302. In this example, the response 303 contains a small number of options 303A, 303B (here, two options), which does not exceed the threshold for the number of options (here, two options). Accordingly, the apparatus causes the response 303, specifically the options 303A, 303B, to be presented audibly to the user 301. The user 301 selects 304 one of the options. In an example, the user 301 may select an option using a voice command. Upon selection of the option, the apparatus responds 305 by taking some action in response to the selection of the option by the user 301.

In another example, the apparatus 102 may determine the appropriate format for the response based on the amount of time that would be required for the response to be played or read out audibly for the user 101.

In one example of this, the apparatus 102 determines the appropriate format for the response based on the amount of time that would be required for the entire response to be played or read out audibly for the user 101. If the entire response would take longer than a threshold period of time to be played out audibly to the user 101, then the apparatus 102 causes the response to be presented visually on a display screen 107. As an example, the threshold period of time may be say 7 or 10 to 15 seconds or so.

In another example, the apparatus 102 may determine the appropriate format for the response based on the number of words in the response. If the number of words in the response is lower than some threshold, then the response is played or read out audibly for the user 101. On the other hand, if the number of words in the response is greater than the threshold, then the apparatus 102 causes the response to be presented visually on a display screen 107. As an example, the threshold number of words may be say 20 or 30 or 50 words say.

In another example where the response contains a number of options that must be presented to the user 101, there may be a first threshold period of time for the individual options and there may be a second, longer, threshold period of time for the entire response. If either of these thresholds would be exceeded, then the apparatus 102 causes the response to be presented visually on a display screen 107. As an example, the first threshold, for the individual options, may be say 3 to 5 seconds or so, and the second threshold, for the entire response, may be say 10 to 15 seconds or so.

Again, in some examples, the user 101 is able to set the threshold period(s) of time at the apparatus 102, and may set different thresholds for different functions. For example, if the voice command 103 from the user 101 relates to banking, the period(s) of time and/or the number of words may be small. On the other hand, if the voice command 103 from the user 101 relates to control of lighting or heating in the user's home or office, the threshold period(s) of time and/or the number of words may be greater.

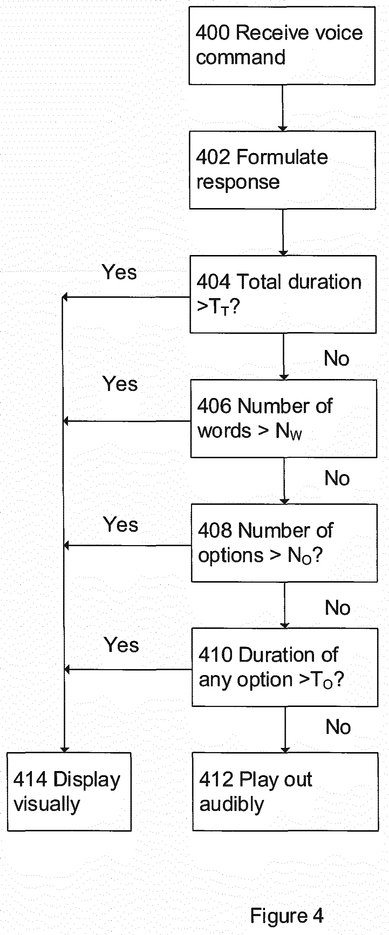

An example of a method according to the present disclosure is shown schematically in the flow diagram of Figure 4. The illustrated example uses a number of characteristics and thresholds. Other examples may not use all of the criteria or thresholds shown in the example of Figure 4.

At 400, a voice command is received. At 402, a response to the voice command is formulated.

At 404, a check is made whether the total duration of the response formulated at 402 (if read out audibly) would be greater than some total threshold period of time T_{T}. If not, then flow proceeds to 406.

At 406, a check is made whether the total number of words in the response formulated at 402 is greater than some threshold number Nw. If not, then flow proceeds to 408.

At 408, a check is made whether the response formulated at 402 contains a number of options, which are to be presented to the user, which exceeds a threshold No. If not, then flow proceeds to 410.

At 410, a check is made whether the duration of any option in the response formulated at 402 (if read out audibly) would be greater than some threshold period of time To for options. If not, then flow proceeds to 412.

At 412, the response is read out audibly.

On the other hand, in this example if any of the thresholds was or would be exceeded, then flow passes to 414 at which the response is caused to be displayed visually.

Accordingly, there is provided an intelligent speech command system which adapts how responses are presented to users depending on the length and/or complexity of the responses. Simple or short responses are presented audibly to the user whereas long or complex responses are presented visually to the user.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (e.g. a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method of responding to a voice command received from a user, the method comprising:
receiving a voice command from a user;
processing the received voice command to formulate a response for the user; and
providing the response to the user;
wherein the response is selectively provided to the user in an audio format or in a visual format depending on one or more characteristics of the response.

2. A method according to claim 1, wherein the response comprises a number of options from which the user is required to select, the one or more characteristics of the response comprising the number of options from which the user is required to select, and the response is provided to the user in a visual format if the response contains more than a threshold number of options from which the user is required to select.

3. A method according to claim 1 or claim 2, wherein the one or more characteristics of the response comprises the amount of time necessary for the entire response to be played out audibly to the user, and the response is provided to the user in a visual format if the entire response would take longer than a threshold period of time to be played out audibly to the user.

4. A method according to any of claims 1 to 3, wherein the response comprises a number of options from which the user is required to select, wherein the one or more characteristics of the response comprise the amounts of time necessary for each of the options to be played out audibly to the user and the amount of time necessary for the entire response to be played out audibly to the user, and the response is provided to the user in a visual format if any of the options of the response would take longer than a first threshold period of time to be played out audibly to the user or if the entire response would take longer than a second threshold period of time to be played out audibly to the user.

5. A method according to any of claims 1 to 4, wherein the one or more characteristics of the response comprises the number of words in the response, and the response is provided to the user in a visual format if the response contains more than a threshold number of words.

6. A method according to any of claims 1 to 5, wherein the method is performed by an apparatus which comprises a display screen for display of a response in a visual format.

7. A method according to any of claims 1 to 6, wherein the method is performed by an apparatus which is in communication with another device, wherein the apparatus is operable to cause a display screen of the other device to display a response in a visual format.

8. Apparatus for responding to a voice command received from a user, the apparatus comprising:
a voice input device for receiving a voice command from a user; and
a processor constructed and arranged to process the received voice command to formulate a response for the user and to cause the response to be provided to the user;
wherein the processor is arranged to cause the response to be selectively provided to the user in an audio format or in a visual format depending on one or more characteristics of the response.

9. Apparatus according to claim 8, wherein in the case that the response comprises a number of options from which the user is required to select, the processor is arranged to cause the response to be provided to the user in a visual format if the response contains more than a threshold number of options from which the user is required to select.

10. Apparatus according to claim 8 or claim 9, wherein the processor is arranged to cause the response to be provided to the user in a visual format if the entire response would take longer than a threshold period of time to be played out audibly to the user.

11. Apparatus according to any of claims 8 to 10, wherein in the case that the response comprises a number of options from which the user is required to select, the processor is arranged to cause the response to be provided to the user in a visual format if any of the options of the response would take longer than a first threshold period of time to be played out audibly to the user or if the entire response would take longer than a second threshold period of time to be played out audibly to the user.

12. Apparatus according to any of claims 8 to 11, wherein the processor is arranged to cause the response to be provided to the user in a visual format if the response contains more than a threshold number of words.

13. Apparatus according to any of claims 8 to 12, the apparatus comprising a display screen for display of a response in a visual format.

14. Apparatus according to any of claims 8 to 13, the apparatus being operable to be in communication with another device and being operable to cause a display screen of said other device to display a response in a visual format.

15. A computer program comprising instructions such that when the computer program is executed on a computing device, the computing device is arranged to carry out a method according to any of claims 1 to 7.

## Patentansprüche

1. Computerimplementiertes Verfahren des Antwortens auf einen von einem Benutzer empfangenen Sprachbefehl, wobei das Verfahren aufweist:
Empfangen eines Sprachbefehls von einem Benutzer;
Verarbeiten des empfangenen Sprachbefehls, um eine Antwort für den Benutzer zu formulieren; und
Liefern der Antwort an den Benutzer;
wobei die Antwort an den Benutzer abhängig von ein oder mehr Charakteristiken der Antwort wahlweise in einem Audioformat oder in einem visuellen Format geliefert wird.

2. Verfahren nach Anspruch 1, bei welchem die Antwort eine Anzahl von Optionen aufweist, von denen der Benutzer auswählen muss, wobei die ein oder mehr Charakteristiken der Antwort die Anzahl von Optionen aufweisen, von denen der Benutzer auswählen muss, und die Antwort an den Benutzer in einem visuellen Format geliefert wird, wenn die Antwort mehr als eine Grenzanzahl von Optionen enthält, von denen der Benutzer auswählen muss.

3. Verfahren nach Anspruch 1 oder Anspruch 2, bei welchem die ein oder mehr Charakteristiken der Antwort die Zeitdauer aufweisen, die zum hörbaren Abspielen der gesamten Antwort an den Benutzer erforderlich ist, und die Antwort an den Benutzer in einem visuellen Format geliefert wird, wenn die gesamte Antwort länger als eine Grenzzeitspanne zum hörbaren Abspielen an den Benutzer dauern würde.

4. Verfahren nach einem der Ansprüche 1 bis 3, bei welchem die Antwort eine Anzahl von Optionen aufweist, von denen der Benutzer auswählen muss, wobei die ein oder mehr Charakteristiken der Antwort die Zeitdauern, die zum hörbaren Abspielen jeder der Optionen an den Benutzer erforderlich sind, und die Zeitdauer, die zum hörbaren Abspielen der gesamten Antwort an den Benutzer erforderlich ist, aufweisen und die Antwort an den Benutzer in einem visuellen Format geliefert wird, wenn eine der Optionen der Antwort länger als eine erste Grenzzeitspanne zum hörbaren Abspielen an den Benutzer dauern würde oder wenn die gesamte Antwort länger als eine zweite Grenzzeitspanne zum hörbaren Abspielen an den Benutzer dauern würde.

5. Verfahren nach einem der Ansprüche 1 bis 4, bei welchem die ein oder mehr Charakteristiken der Antwort die Anzahl an Wörtern in der Antwort aufweisen und die Antwort an den Benutzer in einem visuellen Format geliefert wird, wenn die Antwort mehr als eine Grenzanzahl an Wörtern enthält.

6. Verfahren nach einem der Ansprüche 1 bis 5, bei welchem das Verfahren von einer Vorrichtung durchgeführt wird, die einen Anzeigebildschirm zum Anzeigen einer Antwort in einem visuellen Format aufweist.

7. Verfahren nach einem der Ansprüche 1 bis 6, bei welchem das Verfahren von einer Vorrichtung durchgeführt wird, die mit einem anderen Gerät in Kommunikation steht, wobei die Vorrichtung betreibbar ist, um einen Anzeigebildschirm des anderen Geräts eine Antwort in einem visuellen Format anzeigen zu lassen.

8. Vorrichtung zum Antworten auf einen von einem Benutzer empfangenen Sprachbefehl, wobei die Vorrichtung aufweist:
ein Spracheingabegerät zum Empfangen eines Sprachbefehls von einem Benutzer; und
einen Prozessor, der konstruiert und eingerichtet ist, um den empfangenen Sprachbefehl zu verarbeiten, um eine Antwort für den Benutzer zu formulieren und die Antwort an den Benutzer liefern zu lassen,
wobei der Prozessor eingerichtet ist, um die Antwort an den Benutzer abhängig von ein oder mehr Charakteristiken der Antwort wahlweise in einem Audioformat oder in einem visuellen Format liefern zu lassen.

9. Vorrichtung nach Anspruch 8, bei welcher in dem Fall, dass die Antwort eine Anzahl von Optionen aufweist, von denen der Benutzer auswählen muss, der Prozessor eingerichtet ist, um die Antwort an den Benutzer in einem visuellen Format liefern zu lassen, wenn die Antwort mehr als eine Grenzanzahl von Optionen enthält, von denen der Benutzer auswählen muss.

10. Vorrichtung nach Anspruch 8 oder Anspruch 9, bei welcher der Prozessor eingerichtet ist, um die Antwort an den Benutzer in einem visuellen Format liefern zu lassen, wenn die gesamte Antwort länger als eine Grenzzeitspanne zum hörbaren Abspielen an den Benutzer dauern würde.

11. Vorrichtung nach einem der Ansprüche 8 bis 10, bei welcher in dem Fall, dass die Antwort eine Anzahl von Optionen aufweist, von denen der Benutzer auswählen muss, der Prozessor eingerichtet ist, um die Antwort an den Benutzer in einem visuellen Format liefern zu lassen, wenn eine der Optionen der Antwort länger als eine erste Grenzzeitspanne zum hörbaren Abspielen an den Benutzer dauern würde oder wenn die gesamte Antwort länger als eine zweite Grenzzeitspanne zum hörbaren Abspielen an den Benutzer dauern würde.

12. Vorrichtung nach einem der Ansprüche 8 bis 11, bei welcher der Prozessor eingerichtet ist, um die Antwort an den Benutzer in einem visuellen Format liefern zu lassen, wenn die Antwort mehr als eine Grenzanzahl an Wörtern enthält.

13. Vorrichtung nach einem der Ansprüche 8 bis 12, wobei die Vorrichtung einen Anzeigebildschirm zum Anzeigen einer Antwort in einem visuellen Format aufweist.

14. Vorrichtung nach einem der Ansprüche 8 bis 13, wobei die Vorrichtung betreibbar ist, um mit einem anderen Gerät in Kommunikation zu stehen, und betreibbar ist, um einen Anzeigebildschirm des anderen Geräts eine Antwort in einem visuellen Format anzeigen zu lassen.

15. Computerprogramm mit Anweisungen derart, dass, wenn das Computerprogramm auf einem Computergerät ausgeführt wird, das Computergerät eingerichtet ist, um ein Verfahren nach einem der Ansprüche 1 bis 7 auszuführen.

## Revendications

1. Procédé mis en œuvre par ordinateur pour répondre à une commande vocale reçue d'un utilisateur, le procédé consistant à :
recevoir une commande vocale d'un utilisateur ;
traiter la commande vocale reçue pour formuler une réponse pour l'utilisateur ; et
fournir la réponse à l'utilisateur ;
dans lequel la réponse est fournie de manière sélective à l'utilisateur dans un format audio ou dans un format visuel en fonction d'une ou plusieurs caractéristiques de la réponse.

2. Procédé selon la revendication 1, dans lequel la réponse comprend un nombre d'options que l'utilisateur est tenu de sélectionner, lesdites une ou plusieurs caractéristiques de la réponse comprenant le nombre d'options que l'utilisateur est tenu de sélectionner, et dans lequel la réponse est fournie à l'utilisateur dans un format visuel si le nombre d'options contenu dans la réponse dépasse un seuil de nombre d'options que l'utilisateur est tenu de sélectionner.

3. Procédé selon la revendication 1 ou 2, dans lequel lesdites une ou plusieurs caractéristiques de la réponse comprennent la quantité de temps nécessaire pour que la réponse entière soit diffusée de manière audible à l'attention de l'utilisateur, et dans lequel la réponse est fournie à l'utilisateur dans un format visuel si la réponse entière devait prendre plus de temps qu'un seuil de période de temps pour être diffusée de manière audible à l'attention de l'utilisateur.

4. Procédé selon l'une quelconque des revendications 1 à 3, dans lequel la réponse comprend un nombre d'options que l'utilisateur est tenu de sélectionner, dans lequel lesdites une ou plusieurs caractéristiques de la réponse comprennent les quantités de temps nécessaires pour que chacune des options soit diffusée de manière audible à l'attention de l'utilisateur, et comprennent la quantité de temps nécessaire pour que la réponse entière soit diffusée de manière audible à l'attention de l'utilisateur, et dans lequel la réponse est fournie à l'utilisateur dans un format visuel si l'une quelconque des options de la réponse devait prendre plus de temps qu'un premier seuil de période de temps pour être diffusée de manière audible à l'attention de l'utilisateur ou si la réponse entière devait prendre plus de temps qu'un deuxième seuil de période de temps pour être diffusée de manière audible à l'attention de l'utilisateur.

5. Procédé selon l'une quelconque des revendications 1 à 4, dans lequel lesdites une ou plusieurs caractéristiques de la réponse comprennent le nombre de mots dans la réponse, et dans lequel la réponse est fournie à l'utilisateur dans un format visuel si le nombre de mots de la réponse dépasse un seuil de nombre de mots.

6. Procédé selon l'une quelconque des revendications 1 à 5, dans lequel le procédé est effectué par un appareil qui comprend un écran d'affichage pour l'affichage d'une réponse dans un format visuel.

7. Procédé selon l'une quelconque des revendications 1 à 6, dans lequel le procédé est effectué par un appareil qui est en communication avec un autre dispositif, dans lequel l'appareil peut fonctionner pour faire en sorte qu'un écran d'affichage de l'autre dispositif affiche une réponse dans un format visuel.

8. Appareil pour répondre à une commande vocale reçue d'un utilisateur, l'appareil comprenant :
un dispositif d'entrée vocale pour recevoir une commande vocale d'un utilisateur ; et
un processeur construit et agencé pour traiter la commande vocale reçue pour qu'elle formule une réponse pour l'utilisateur et pour faire en sorte que la réponse soit fournie à l'utilisateur ;
dans lequel le processeur est agencé pour faire en sorte que la réponse soit fournie de manière sélective à l'utilisateur dans un format audio ou dans un format visuel en fonction d'une ou plusieurs caractéristiques de la réponse.

9. Appareil selon la revendication 8, dans lequel, dans le cas où la réponse comprend un nombre d'options que l'utilisateur est tenu de sélectionner, le processeur est agencé pour faire en sorte que la réponse soit fournie à l'utilisateur dans un format visuel si le nombre d'options contenu dans la réponse dépasse un seuil de nombre d'options que l'utilisateur est tenu de sélectionner.

10. Appareil selon la revendication 8 ou 9, dans lequel le processeur est agencé pour faire en sorte que la réponse soit fournie à l'utilisateur dans un format visuel si la réponse entière devait prendre plus de temps qu'un seuil de période de temps pour être diffusée de manière audible à l'attention de l'utilisateur.

11. Appareil selon l'une quelconque des revendications 8 à 10, dans lequel, dans le cas où la réponse comprend un nombre d'options que l'utilisateur est tenu de sélectionner, le processeur est agencé pour faire en sorte que la réponse soit fournie à l'utilisateur dans un format visuel si l'une quelconque des options de la réponse devait prendre plus de temps qu'un premier seuil de période de temps pour être diffusée de manière audible à l'attention de l'utilisateur ou si la réponse entière devait prendre plus de temps qu'un deuxième seuil de période de temps pour être diffusée de manière audible à l'attention de l'utilisateur.

12. Appareil selon l'une quelconque des revendications 8 à 11, dans lequel le processeur est agencé pour faire en sorte que la réponse soit fournie à l'utilisateur dans un format visuel si le nombre de mots de la réponse dépasse un seuil de nombre de mots.

13. Appareil selon l'une quelconque des revendications 8 à 12, l'appareil comprenant un écran d'affichage pour l'affichage d'une réponse dans un format visuel.

14. Appareil selon l'une quelconque des revendications 8 à 13, l'appareil pouvant fonctionner pour être en communication avec un autre dispositif et pouvant fonctionner pour faire en sorte qu'un écran d'affichage dudit autre dispositif affiche une réponse dans un format visuel.

15. Programme informatique comprenant des instructions telles que, lorsque le programme informatique est exécuté sur un dispositif informatique, le dispositif informatique est agencé pour effectuer un procédé selon l'une quelconque des revendications 1 à 7.
